# EUROPÄISCHE PATENTSCHRIFT

(11) **EP 0 338 433 B1**
(45) Veröffentlichungstag und Bekanntmachung des Hinweises auf die Patenterteilung: **04.08.1993**
(21) Anmeldenummer: 89106608.6
(22) Anmeldetag: 13.04.1989
(51) Int. Cl.: B01D 25/12

(54) **Rotorfilterpresse mit Kammerströmung**
Rotorfilterpress with chamberflow
Filtre-presse à rotor provoquant un courant dans les chambres

(30) Priorität: 21.04.1988 DE 3813345
(43) Veröffentlichungstag der Anmeldung: 25.10.1989
(73) Patentinhaber: APPARATEBAU BIERSDORF Walter Krämer Gesellschaft mit beschränkter Haftung, Rain am Lech, D-86641 Rain (DE)
(72) Erfinder: Hölzemann, Jürgen, D-8852 Rain am Lech (DE)
(74) Vertreter: Böhme, Volker, Dipl.-Ing.

(56) Entgegenhaltungen:
- DE-A- 2 545 482
- DE-C- 241 471
- FR-A- 2 289 224
- FR-A- 2 538 013
- US-A- 4 513 477
- US-A- 4 657 636

## Beschreibung

Die Erfindung betrifft eine Rotorfilterpresse mit Kammerströmung, bei der ein an mindestens einer Stirnseite mit Strömungsrippen versehener Rotor auf einer Welle in einer Kammer angeordnet ist und die Stirnkonturen der Strömungsrippen des sich drehenden Rotors eine Stirnkonturenfläche überstreichen, bei der ein von der Welle durchdrungener Stator ein Filtermittel trägt, das mit einer Stirnfläche der Stirnkonturenfläche mit Abstand gegenüberliegt, und bei der eine Trübe zwischen Filtermittel und Rotor bei sich drehendem Rotor eine in sich geschlossene Rotationsströmung bildet.

Bei einer bekannten (DE-C- 34 26 527) Rotorfilterpresse dieser Art ist der Abstand zwischen der Filtermittel-Stirnfläche und der Rotor-Stirnkonturenfläche in radialer Richtung konstant und ist die Rotationsströmung im wesentlichen ungestört kreisförmig. Durch die Rotationsströmung wird das Filtermittel für eine gewisse Zeitspanne sedimentationsfrei gehalten, während der das Filtermittel unverstopft ist und Filterung stattfindet. Diese Zeitspanne ist in vielen Fällen zu kurz; trotz der Rotationsströmung erfolgen Sedimentation und Verstopfung des Filtermittels, bevor die Menge an Filtergut angefallen ist, die im Hinblick auf das Volumen der Kammer bzw. das Volumen des für Filtergut vorgesehenen Hohlraumes der Kammer anfallen könnte. Das Verstopfen des Filtermittels erfolgt aufgrund der Zentrifugalkraft radial von außen nach innen.

Bei einer bekannten kontinuierlichen Filtervorrichtung (FR-A-2 289 224 bzw. DE-A-2 545 482) ist der Rotor frei von Strömungsrippen, so daß die Stirnkonturenfläche von der Stirnfläche des Rotors gebildet ist. Bei dieser kontinuierlichen Filtervorrichtung ändert sich der Abstand zwischen der Filtermittel-Stirnfläche und der Rotor-Stirnkonturenfläche durch eine plastische Gestaltung des Rotors, indem dieser in der Dicke radial von innen nach außen abnimmt. Es wir durch eine gewisse Haftung von Filtergut/Trübe an dem Stator bzw. Filtermittel eine Turbulenz bzw. Verwirbelung gebildet, die zu einem verbesserten Abführen von Verunreinigungsteilchen oder Beimischungen führt. Die unter Mitwirkung der Zentrifugalkräfte auftretenden Verwirbelungen stören die Gleichmäßigkeit der Rotationsströmung und fördern die Bewegung des Filtergutes in Relation zum Filtermittel und lassen daher ein Absetzen des Filtergutes am Filtermittel erst zu, wenn eine größere Menge an Filtergut in der Kammer angefallen ist. Durch die mit Verwirbelungen versehene Rotatonsströmung wird das Filtermittel für eine gewisse Zeitspanne sedimentationsfrei gehalten, während der das Filtermittel unverstopft ist und Filterung stattfindet. Diese Zeitspanne ist in vielen Fällen zu kurz; trotz der mit Verwirbelungen versehenen Rotationsströmung erfolgen Sedimentation und Verstopfung des Filtermittels, bevor die Menge an Filtergut angefallen ist, die im Hinblick auf das Volumen der Kammer bzw. das Volumen des für Filtergut vorgesehenen Hohlraumes der Kammer anfallen könnte. Das Verstopfen des Filtermittels erfolgt aufgrund der Zentrifugalkraft radial von außen nach innen.

Aufgabe der Erfindung ist es daher, eine Rotorfilterpresse gemäß oberbegriff des Patentanspruchs 1 zu schaffen, bei der die Sedimentationsfreiheit über eine längere Zeitspanne gehalten ist. Die erfindungsgemäße Rotorfilterpresse ist zur Lösung dieser Aufgabe mit dem Kennzeichnenden Merkmalen des Patentanspruchs 1 versehen.

Durch die Abstandsänderung werden eine zeitliche Verlängerung der Sedimentationsfreiheit und eine Vergrößerung der erreichbaren Kammerfüllung mit Filtergut erreicht. Die unter Mitwirkung der Zentrifugalkräfte auftretenden Verwirbelungen stören die Gleichmäßigkeit der Rotationsströmung und fördern die Bewegung des Filtergutes in Relation zum Filtermittel und lassen daher ein Absetzen des Filtergutes am Filtermittel erst zu, wenn eine größere Menge an Filtergut in der Kammer angefallen ist. Der sog. cross-flow-Effekt ist verbessert. Die Verwirbelungen verlaufen unter Mitwirkung der Zentrifugalkräfte in radialer Richtung, so daß entlang dem Filtermittel die Strömung nicht nur aufgrund der Rotationsströmung in Umfangsrichtung verläuft, sondern aufgrund der Verwirbelung auch in radialer Richtung.

Es ist denkbar, über eine Umfangslinie rund um die Welle gesehen, entlang verschiedenen Radien verschiedene Abstand-Änderungen vorzusehen. In der Regel ist jedoch die radiale Abstand-Änderung rund um die Welle gleich, Diese Gleichmäßigkeit der Abstand-Änderung führt zu einer rundum gleichmäßigen radialen Verwirbelungsströmung, die der Rotationsströmung überlagert ist.

Die Abstand-Änderung entlang einem Radius ist z.B. abwechselnd eine Zunahme oder eine Abnahme des Abstands. In der Regel ist jedoch die Abstand-Änderung entlang einem Radius gleichsinnig, d.h. nur zunehmend oder nur abnehmend. Diese Gestaltung fördert die Ausbildung einer radialen Verwirbelung.

Die Stirnfläche des mit dem Filtermittel versehenen Stators ist in Umfangsrichtung z.B. durchgehend plan. Besonders zweckmäßig und vorteilhaft ist es jedoch, wenn der Stator an der Filtermittel-Stirnfläche sich in radialer Richtung erstreckende Abweiserrippen bildet, die in der axialen Höhe der vorhandenen Abstandsvergrößerung angepaßt sind. Diese Abweiserrippen sind in den Bereichen vorgesehen, in denen der Abstand zwischen Filtermittel-Stirnfläche und Rotor-Stirnkonturenfläche größer wird und gleichen diese Abstandsvergrößerung aus. Sie verbessern ebenfalls die Erzeugung einer radialen Verwirbelung. Die Abweiserrippen stellen in Bezug auf die Rotationsströmung eine Art Stromstörer dar.

Die Zunahme des hier interessierenden Abstandes kann in radialer Richtung von der Melle weg oder zur Welle hin erfolgen; sie kann gleichmäßig sein oder entlang einer gebogenen Linie erfolgen. Die Erfindung ist bei waagerechter, senkrechter oder schräger Anordnung der Melle anwendbar. In der Regel umfaßt die erfindungsgemäße Rotorfilterpresse auf der Welle mehrere Statoren und Rotoren, d.h. mehrere Kammern, in denen jeweils ein Rotor angeordnet ist. Das Filtermittel ist z.B. ein Filtertuch. Die Gestaltung des mit Strömungsrippen versehenen Rotors ist z.B. in an sich bekannter Weise beliebig.

In der Zeichnung ist eine bevorzugte Ausführungsform der Erfindung dargestellt und zeigt
- Fig. 1: einen Schnitt eines Teiles einer Rotorfilterpresse mit Kammerströmung,
- Fig. 2: einen Schnitt gemäß Linie II-II in Fig. 1 und
- Fig. 3: einen Schnitt gemäß Linie III-III in Fig. 1,

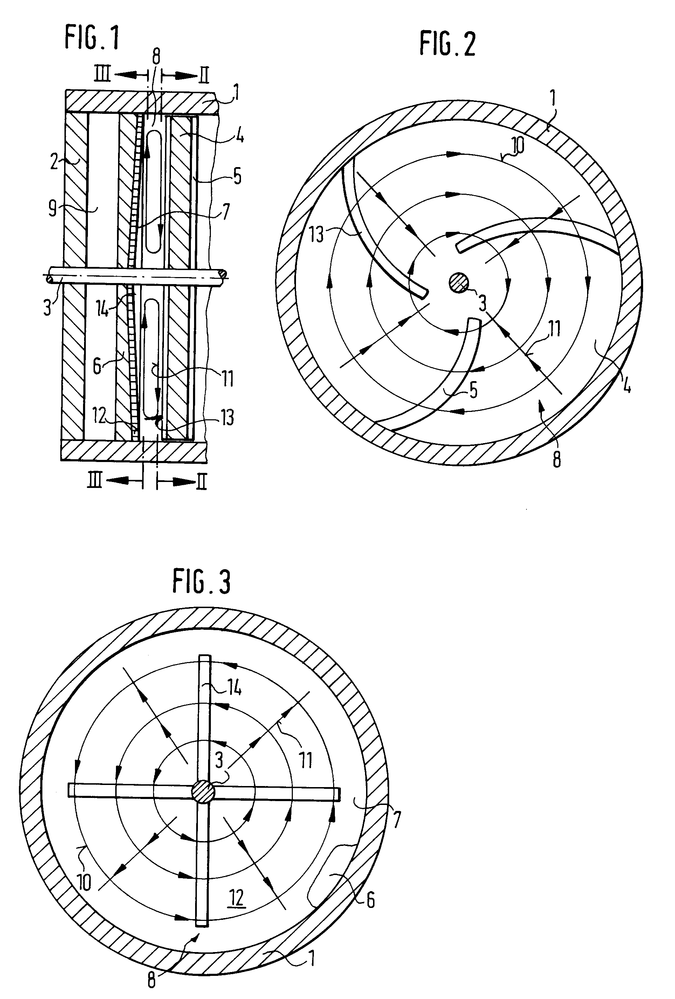

Die in Fig. 1 bis 3 dargestellte Rotorfilterpresse besitzt ein Gehäuse, das von einem zylindrischen Mantel 1 und Stirnwänden 2 gebildet ist, von denen nur eine gezeigt ist. In dem Gehäuse verläuft eine Welle 3, die von einem nicht gezeigten Motor her antreibbar ist. Auf der Welle 3 sitzen Rotoren 4, von denen nur einer gezeigt ist und die an beiden Stirnseiten jeweils mit Strömungsrippen 5 versehen sind, die sich im wesentlichen radial erstrecken. Mit Abstand von jeder Stirnseite jedes Rotors 4 ist im Gehäuse jeweils ein Stator 6 vorgesehen, der dem Rotor ein Filtermittel 7 zuwendet. In dem Gehäuse sind mehrere Kammern gebildet, die jeweils eine Hälfte eines Rotors 4 mit einer mit Strömungsrippen 5 besetzten Stirnfläche, einen Hohlraum 8 zwischen dieser Stirnfläche und dem Filtermittel 7, den Stator 6 und einen Hohlraum 9 axial hinter dem Stator umfaßt. Es wird dem Hohlraum 8 eine zu filternde Trübe zugeführt, deren einer Bestandteil das Filtermittel 7 passiert und in den Hohlraum 9 gelangt und deren anderer Bestandteil als Filtergut in dem Hohlraum 8 bei dem Filtermittel 7 bleibt. Die Rotorfilterpresse ist insofern im Aufbau und in der Wirkungsweise an sich bekannt, z.B. durch DE-C- 3426527.

Durch die Rotation des mit den Strömungsrippen 5 versehenen Rotors 4 wird die Trübe, die sich in dem Hohlraum 8 befindez, in eine Rotationsströmung 10 versetzt, die in Fig. 2 und 3 durch Kreise angedeutet ist. Die Rotationsströmung verläuft um die Welle 3 herum und im wesentlichen in Ebenen, die rechtwinkelig zur Welle 3 sind. Dieser Rotationsströmung 10 sind Verwirbelungen 11 überlagert, die die Rotationsströmung stören bzw. unterbrechen. Gemäß Fig. 1 bis 3 verlaufen die Verwirbelungen 11 im wesentlichen radial zwischen Welle 3 und Mantel 1 und zwar in Ebenen, in denen die Welle 3 liegt. Diese Verwirbelungen 11, deren Verlauf im einzelnen nicht bedeutsam ist, sind bedingt dadurch, daß der Abstand zwischen der Stirnfläche 12 des Filtermittels und einer gedachten Stirnkonturenfläche sich radial von außen nach innen vergrößert. Die Stirnkonturenfläche ist die von den Stirnkonturen 13 der Strömungsrippen 5 überstrichene Fläche. An der Stirnfläche 12 des Stators 6 sind geradlinig radial verlaufende Abweiserrippen 14 vorgesehen, deren in Achsrichtung gemessene Höhe radial von innen nach außen in dem Maß abnimmt, in dem sich der Abstand verkleinert.

In Fig. 1 sind das Ausmaß der Abstandsänderung und die Höhe der Abweiserrippen übertrieben stark dargestellt.

Die hier interessierenden Verwirbelungen treten beim Ausfiltern von Feststoffteilchen sehr lange auf, bevor die Konzentration zu hoch ist und die Kammer leerungsbedürftig ist. Man kann die Umdrehungsgeschwindigkeit des Rotors erhöhen, um Verwirbelungen zu erhöhen und zu erzeugen. Die Abweiserrippen haben je nach Anwendungsgebiet in Achsrichtung z.B. eine Abmessung von 5 mm bis 70 mm. Der Abstand zwischen dem Rotor und dem Filtermittel beträgt 60 bis 70 mm. Aufgrund der Verwirbelungen ist der Durchsatz der Rotorfilterpresse um das 3- bis 5-fache erhöht. Die Verwirbelungen ermöglichen auch bei Membranen mit kleiner Porosität überhaupt erst die Filtration mit einem gewissen kontinuierlichen Durchsatz.

Die Verwirbelungen werden in der Regel so erzeugt, daß die auszufilternde Substanz verstärkt von Filtermittel weg in den Innenraum der Kammer und von außen nach innen bewegt wird. Dies wirkt den Verhältnissen entgegen, die bei einer Rotationsströmung vorhanden sind. Die hier behandelte Abstandsänderung beträgt je nach Bauweise der Rotorfilterpresse von z.B. 5 mm bis z.B. 20 oder 30 mm.

## Patentansprüche

1. Rotorfilterpresse mit Kammerströmung, bei der ein an mindestens einer Stirnseite mit Strömungsrippen (5) versehener Rotor (4) auf einer Welle (3) in einer Kammer angeordnet ist und die Stirnkonturen der Strömungsrippen (5) des sich drehenden Rotors eine Stirnkonturenfläche (13) überstreichen, bei der ein von der Welle (3) durchdrungener Stator (6) ein Filtermittel (7) trägt, das mit seiner Stirnfläche (12) der Stirnkonturenfläche (13) mit Abstand gegenüberliegt, und bei der eine Trübe zwischen Filtermittel und Rotor bei sich drehendem Rotor eine in sich geschlossene Rotationsströmung (10) bildet, **dadurch gekennzeichnet,** daß sich der Abstand zwischen der Stirnfläche (12) und der Stirnkonturenfläche (13) in radialer Richtung durch eine vom Ebenen abweichende plastische Gestaltung des Stators (6) derart ändert, daß in der Rotationsströmung (10) Verwirbelungen (11) gegeben sind.

2. Rotorfilterpresse nach Anspruch 1, dadurch gekennzeichnet, daß der Stator (6) an der Stirnfläche (12) sich in radialer Richtung erstreckende Abweiserrippen (14) bildet, die in der axialen Höhe der vorhandenen Abstandsvergrößerung so angepaßt sind, daß der Abstand in Axialrichtung zwischen der Abweiserrippenstirnseite und der Stirnkonturenfläche (13) konstant bleibt.

## Claims

1. A rotor filter press with chamber flow, in which a rotor (4) provided with flow ribs (5) on at least one face is arranged on a shaft (3) in a chamber and the frontal contours of the flow ribs (5) of the rotating rotor brush over a frontal contour surface (13), in which a stator (6) penetrated by the shaft (3) bears a filter medium (7), the front surface (12) of which faces the frontal contour surface (13) at a distance therefrom, and in which a slurry forms an enclosed rotary flow (10) between the filter medium and the rotor as the rotor rotates, characterised in that the distance between the front surface (12) and the frontal contour surface (13) in the radial direction varies as a result of plastic shaping of the stator (6) deviating from the plane such that there are turbulences (11) present in the rotary flow (10).

2. A rotor filter press according to claim 1, characterised in that on the front surface (12) the stator (6) forms deflecting ribs (14) extending in the radial direction which are adapted in the axial height to the existing increase in the distance such that the distance in the axial direction between the front surface of the deflecting ribs and the frontal contour surface (13) remains constant.

## Revendications

1. Filtre-presse à rotor utilisant une circulation dans une chambre, dans lequel un rotor (4) muni de nervures d'entraînement (5) sur au moins une face frontale est monté sur un arbre (3) dans une chambre, et les profils frontaux des nervures d'entraînement (5) du rotor en rotation génèrent une surface de profils frontaux (13), dans lequel un stator (6) traversé par l'arbre (3) porte un milieu filtrant (7) dont la surface frontale (12) fait face, à un certain écartement, à la surface des profils frontaux (13), et dans lequel une suspension forme un courant tournant (10) fermé en soi entre le milieu filtrant et le rotor lorsque le rotor tourne, caractérisé en ce que la distance d'écartement entre la surface frontale (12) et la surface des profils frontaux (13) varie dans la direction radiale sous l'effet d'une configuration plastique du stator (6) qui est différente du plan, de telle manière qu'il se forme des tourbillons (11) dans le courant tournant (10).

2. Filtre-presse à rotor selon la revendication 1, caractérisé en ce que le stator (6) forme, sur la surface frontale (21), des nervures déflectrices (14) s'étendant dans la direction radiale, qui sont adaptées par leur hauteur radiale à la variation existante de l'écartement de telle manière que la distance de l'écartement axial entre la face frontale des nervures déflectrices et la surface des profils frontaux (13) reste constante.
